# EUROPÄISCHE PATENTSCHRIFT

(11) **EP 3 005 003 B1**
(45) Veröffentlichungstag und Bekanntmachung des Hinweises auf die Patenterteilung: **02.01.2019**
(21) Anmeldenummer: 14734008.7
(22) Anmeldetag: 04.06.2014
(51) Int. Cl.: G05B 19/418, B65B 57/00

(54) **VERFAHREN FÜR DIE BESTIMMUNG ZU OPTIMIERENDER BEARBEITUNGSSCHRITTE IN EINER SACKFÜLLANLAGE**
METHOD FOR DETERMINING PROCESSING STEPS TO BE OPTIMIZED IN A BAG-FILLING SYSTEM
PROCÉDÉ POUR DÉTERMINER DES ÉTAPES DE TRAITEMENT À OPTIMISER DANS UNE INSTALLATION DE REMPLISSAGE DE SACS

(30) Priorität: 04.06.2013 DE 102013105754
(43) Veröffentlichungstag der Anmeldung: 13.04.2016
(73) Patentinhaber: Windmöller & Hölscher KG, 49525 Lengerich/Westf. (DE)
(72) Erfinder: VOSS, Hans-Ludwig, 49545 Tecklenburg (DE); UDALLY, Ralf, 48145 Münster (DE); HUIL, Oliver, 48477 Hörstel (DE); HAWIGHORST, Thomas, 49205 Hasbergen (DE); GROßE-HEITMEYER, Rüdiger, 49492 Westerkappeln (DE)
(86) Internationale Anmeldenummer: PCT/EP2014/061524
(87) Internationale Veröffentlichungsnummer: WO 2014/195334

(56) Entgegenhaltungen:
- EP-A2- 1 873 064
- DE-A1-102008 040 440
- DE-A1-102008 053 765
- DE-U1- 9 301 355
- US-A1- 2010 287 879

## Beschreibung

Die vorliegende Erfindung betrifft ein Verfahren für die Bestimmung zu optimierender Bearbeitungsschritte in einer Sackfüllanlage zur Befüllung von Sackabschnitten mit Schüttgut sowie eine Sackfüllanlage für die Befüllung von Sackabschnitten mit Schüttgut.

Grundsätzlich ist es bekannt, dass in Sackfüllanlagen einzelne Stationen für die Bearbeitung von Sackabschnitten zur Befüllung dieser Sackabschnitte mit Schüttgut vorgesehen sind. Solche Stationen sind zum Beispiel eine Bodennahtsiegelstation mit Schneidvorrichtung, eine Füllstation oder eine Kopfnahtsiegelstation. Auch andere Siegelstationen, Puffervorrichtungen oder das Abrollen von Vorlagerollen können als Stationen einer Sackfüllanlage beschrieben werden. Um bei bekannten Sackfüllanlagen eine möglichst schnelle Durchlaufzeit einzelner Sackabschnitte für den Füllprozess zu gewährleisten, ist das Bedienpersonal auf die eigene Erfahrung angewiesen. So erfolgt eine Optimierung einzelner Bearbeitungsschritte bisher ausschließlich anhand der Qualitätskontrolle der hergestellten und befüllten Sackabschnitte. Auch kann geschultes Bedienpersonal durch Beobachten der einzelnen Bewegungen der Anlage möglicherweise über lange Jahre Erfahrung aufbauen, um ein Optimierungspotenzial einzelner Bearbeitungsschritte zu erkennen. US 2010/287879 A1 offenbart ein Verfahren für die Bestimmung zu optimierender Bearbeitungsschritte in einer Sackfüllanlage zur Befüllung von Sackabschnitten mit Schüttgut.

Nachteilhaft bei bekannten Sackfüllanlagen ist es jedoch, dass die Optimierung rein erfahrungsbasiert stattfindet. Dies kann auch dazu führen, dass Bearbeitungsschritte optimiert werden, welche hinsichtlich der Gesamtdurchlaufzeit des jeweiligen Sackabschnitts durch die Sackfüllanlage von geringerer Relevanz sind. Zum Beispiel kann es passieren, dass Kühlzeiten reduziert werden, ohne dass hierfür ein Einfluss auf die Gesamtdurchlaufzeit des Sackabschnitts zu erzielen wäre. Somit wird durch erfahrungsbasiertes Optimieren einzelner Bearbeitungsschritte nicht die schnellstmögliche Betriebsgeschwindigkeit der Sackfüllanlage erreicht. Vielmehr kann es sogar zu Fehloptimierungen kommen, welche in unnötiger Weise die Qualität der Sackabschnitte, zum Beispiel durch reduzierte Kühlzeiten, vermindern können.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Optimierung von Bearbeitungsschritten effektiver zu machen und insbesondere sogar teilweise zu automatisieren.

Voranstehende Aufgabe wird gelöst durch ein Verfahren mit den Merkmalen des Anspruchs 1 und eine Sackfüllanlage mit den Merkmalen des Anspruchs 9. Weitere Merkmale und Details der Erfindung ergeben sich aus den Unteransprüchen, der Beschreibung und den Zeichnungen. Dabei gelten Merkmale und Details, die in Zusammenhang mit dem erfindungsgemäßen Verfahren beschrieben sind, selbstverständlich auch in Zusammenhang mit der erfindungsgemäßen Sackfüllanlage und jeweils umgekehrt, sodass bezüglich der Offenbarung zu den einzelnen Erfindungsaspekten stets wechselseitig Bezug genommen wird bzw. werden kann.

Ein erfindungsgemäßes Verfahren dient der Bestimmung zur Optimierung der Bearbeitungsschritte in einer Sackfüllanlage zur Befüllung von Sackabschnitten mit Schüttgut. Hierfür weist das erfindungsgemäße Verfahren die folgenden Schritte auf:
- Überwachen der Taktzeiten von Bearbeitungsschritten der Sackfüllanlage,
- Bestimmen von Bearbeitungspfaden sequenziell ausgeführter Bearbeitungsschritte,
- Bestimmen der Summe der Taktzeiten der Bearbeitungsschritte innerhalb von Bearbeitungspfaden als Ausführungsdauer des jeweiligen Bearbeitungspfades,
- Vergleichen der bestimmten Ausführungsdauer der Bearbeitungspfade,
- Bestimmen des Bearbeitungspfades mit der längsten Ausführungsdauer.

Unter einer Sackfüllanlage ist im Sinne der vorliegenden Erfindung insbesondere eine Anlage nach dem "Form-Fill-Seal (FFS)-Verfahren" zu verstehen. Hierfür wird von einer Vorlagerolle aus eine Folienbahn im Wesentlichen kontinuierlich abgerollt. Über eine Puffervorrichtung, welche als Tänzervorrichtung ausgebildet sein kann, wird die kontinuierliche Abrollgeschwindigkeit in ein schubweises Vorschieben der Folienbahn umgewandelt. Nachfolgend sind unterschiedliche Stationen zur Bearbeitung mit Bearbeitungsschritten der einzelnen Sackabschnitte angeordnet. Dies sind zum Beispiel eine Bodennahtsiegelstation mit einer Schneidvorrichtung, eine Füllstation, eine Kopfnahtsiegelstation sowie eine Kopfnahtkühlstation.

Erfindungsgemäß ist es möglich, dass alle Bearbeitungsschritte hinsichtlich ihrer Taktzeiten überwacht werden. Bevorzugt werden zumindest alle kritischen Bearbeitungsschritte hinsichtlich ihrer Taktzeiten überwacht. Auch wird vorzugsweise die Summe der Taktzeiten aller kritischen, insbesondere aller Bearbeitungsschritte aller kritischen Bearbeitungspfade, bevorzugt aller Bearbeitungspfade, bestimmt.

Für jede Bearbeitungsstation sind ein oder mehrere Bearbeitungsschritte vorgesehen. So ist beispielsweise an der Bodennahtsiegelstation eine Vielzahl von Bearbeitungsschritten durchführbar. Dort müssen verschiedene Klemmbacken in definierten Relativzeiten zueinander geschlossen werden. Anschließend werden Siegelbacken geschlossen, um die Siegelnaht der Bodennaht zu erzeugen. Teilweise parallel oder auch sequenziell dazu kann eine Schneidvorrichtung ein Ablängen der Folienbahn in einzelne Sackabschnitte durchführen. Auch der Transport zwischen den einzelnen Stationen kann jeweils als Bearbeitungsschritt im Sinne der vorliegenden Erfindung verstanden werden. So dienen hier Greifvorrichtungen dazu, den jeweiligen Sackabschnitt von Station zu Station zu fördern. Dies wird üblicherweise in klemmender Ausführung mit Klemmbacken durchgeführt und mit Hilfe eines Pendeltriebes zur Verfügung gestellt.

Jeder Bearbeitungsschritt, welcher innerhalb der Sackfüllanlage durchgeführt wird, benötigt eine gewisse Ausführungszeit. Diese Ausführungszeit wird im Sinne der vorliegenden Erfindung als Taktzeit des jeweiligen Bearbeitungsschrittes bezeichnet. Eine solche Taktzeit kann auch Wartezeit aufweisen, wie dies insbesondere bei den Kühlvorrichtungen der Fall ist. Jeder Bearbeitungsschritt kann hinsichtlich seiner Taktzeit eingestellt werden und von der Kontrolleinheit der Sackfüllanlage definiert vorgegeben werden. So ist es beispielsweise möglich, die Siegelzeit der Bodensiegelstation und der Kopfnahtsiegelstation hinsichtlich der gewünschten Taktzeit und der entsprechenden Einwirkungsdauer auf den Sackabschnitt einzustellen und zu variieren. Auch kann die Taktzeit der Kühlstationen variiert werden und somit die Kühlquantität und die Kühlqualität verändert werden.

Wie aus den voranstehenden Erläuterungen hervorgeht, weist eine Sackfüllanlage eine Vielzahl unterschiedlichster Bearbeitungsschritte auf. Teile dieser Bearbeitungsschritte laufen parallel zueinander ab, während andere Teile der Bearbeitungsschritte sequenziell hintereinander oder zumindest teilweise hintereinander ausgeführt werden. Somit ergibt sich im gesamten Durchlauf durch die Sackfüllanlage eine Vielzahl unterschiedlicher Pfade von sequenziell zueinander ausgerichteten Bearbeitungsschritten. Die parallel ausgeführten Bearbeitungspfade beeinflussen einander nicht bzw. kaum, sodass insgesamt sich unterschiedliche Gesamtausführungsdauern für die unterschiedlichen sequenziell zueinander angeordneten Bearbeitungsschritte innerhalb von Bearbeitungspfaden ausbilden.

Mit anderen Worten reihen sich die Bearbeitungsschritte, welche sequenziell hintereinander ausgeführt werden, in Bearbeitungspfaden aneinander an. Erfindungsgemäß wird nun die Summe aller Taktzeiten aller Bearbeitungsschritte innerhalb jedes Bearbeitungspfades bestimmt. Damit kann jedem Bearbeitungspfad von im Wesentlichen beliebig vielen Bearbeitungspfaden eine definierte und spezifische Ausführungsdauer zur jeweiligen Betriebssituation zugeordnet werden. Erfolgt nun ein Vergleich der einzelnen Bearbeitungspfade hinsichtlich der bestimmten Ausführungsdauer, so wird eine Differenz zwischen den einzelnen Ausführungsdauerwerten der Bearbeitungspfade bestehen. Es wird also einen Bearbeitungspfad mit der kürzesten Ausführungsdauer und einen Bearbeitungspfad mit der längsten Ausführungsdauer geben. Derjenige Bearbeitungspfad, welcher die längste Ausführungsdauer aufweist, kann auch als kritischer Bearbeitungspfad definiert werden. Sämtliche Bearbeitungsschritte innerhalb dieses kritischen Bearbeitungspfades sind also für die in dieser Betriebssituation maximale Geschwindigkeit der Sackfüllanlage ausschlaggebend. Mit anderen Worten würde eine Optimierung von Bearbeitungsschritten außerhalb dieses kritischen Bearbeitungspfades keinerlei Einfluss auf die Gesamtgeschwindigkeit der Sackfüllanlage in der aktuellen Betriebssituation mit sich bringen.

Durch die Bestimmung des kritischen Bearbeitungspfades wird dem Bedienpersonal nun eine Hilfe für die Bestimmung zu optimierender Bearbeitungsschritte zur Verfügung gestellt. Diese befinden sich vorzugsweise ausschließlich innerhalb des kritischen und bestimmten Bearbeitungspfades. Somit wird sichergestellt, dass unnötige Optimierungen ohne jeden Einfluss auf die Geschwindigkeit der Sackfüllanlage in kürzeren Bearbeitungspfaden vermieden werden. Vielmehr wird die Aufmerksamkeit des Bedienpersonals durch das Bestimmen des kritischen Bearbeitungspfades mit der längsten Ausführungsdauer auf die für die Geschwindigkeit der Sackfüllanlage relevanten Bearbeitungsschritte dieses kritischen Bearbeitungspfades gelenkt.

In Summe führt dies dazu, dass neben der Vermeidung von für die Geschwindigkeit der Sackfüllanlage unnötigen Optimierungen eine gezielte Optimierung von auch hilfreichen Bearbeitungsschritten hinsichtlich der Geschwindigkeit der Sackfüllanlage erfolgen kann. Selbstverständlich kann die Information über Bearbeitungspfade mit kürzeren Ausführungsdauern als der längsten Ausführungsdauer ebenfalls Verwendung für eine Optimierung finden. So können zum Beispiel Kühlzeiten einzelner Bearbeitungsschritte in Bearbeitungspfaden mit einer kürzeren Ausführungsdauer bewusst verlängert werden, da dies aufgrund der unkritischen Situation dieses Bearbeitungspfades keinerlei Einwirkung in negativer Hinsicht auf die Geschwindigkeit der Sackfüllanlage beinhaltet.

Die Summierung der einzelnen Taktzeiten erfolgt vorzugsweise in einer Kontrolleinheit, welche insbesondere ausgebildet ist, alle Verfahrensschritte eines erfindungsgemäßen Verfahrens durchzuführen. Die einzelnen Taktzeiten können zum Beispiel über Sensormittel an der jeweiligen Bearbeitungsstation der Sackfüllanlage aufgenommen werden. Dabei kann zum Beispiel eine Stoppfunktion zur Verfügung stehen, um den Start und das Ende des jeweiligen Bearbeitungsschritts zu erfassen. Das Summieren der einzelnen Taktzeiten erfolgt dabei vorzugsweise ohne mögliche Pausen zwischen den einzelnen Taktzeiten, also unter Berücksichtigung entsprechender Taktpuffer zwischen den Taktzeiten. Dementsprechend wird bei Bearbeitungspfaden mit einer kürzeren Ausführungsdauer eine Kombination über den gesamten Durchlauf durch die Sackfüllanlage aus Taktzeiten und Taktpuffern bestehen, wie dies später noch näher erläutert wird.

Die Optimierung bringt die bereits beschriebenen Vorteile mit sich. Damit wird auch sichergestellt, dass eine höhere Qualität der hergestellten Sackabschnitte mit befülltem Schüttgut zur Verfügung gestellt werden kann.

Ein erfindungsgemäßes Verfahren lässt sich dahingehend weiterbilden, dass zumindest der bestimmte Bearbeitungspfad mit der längsten Ausführungsdauer, insbesondere alle Bearbeitungspfade, zusammen mit der jeweiligen Ausführungsdauer, auf einer Anzeigevorrichtung angezeigt werden. So kann die Sackfüllanlage zum Beispiel über eine Anzeige in Form eines Displays verfügen, welche unterschiedlichste Parameter der Sackfüllanlage anzeigt oder sogar einstellbar macht. Eine Anzeige des bestimmten und damit kritischen Bearbeitungspfades auf dieser Anzeigevorrichtung erlaubt eine einfache Kommunikation der durch das erfindungsgemäße Verfahren bestimmten Information. Damit erfolgt eine noch leichtere und vor allem in visueller Weise noch sicherere Führung des Bedienpersonals hinsichtlich der gewünschten Optimierung. Die Anzeige kann zum Beispiel in Listenform, insbesondere in priorisierter Weise erfolgen. So ist es möglich, dass eine Liste mit sämtlichen Bearbeitungspfaden übereinander angeordnet ist. Der erste Eintrag dieser Liste entspricht dabei dem Bearbeitungspfad mit der längsten Ausführungsdauer und der letzte Eintrag dieser Liste dem Bearbeitungspfad mit der kürzesten Ausführungsdauer. So ist dem Bedienpersonal eine Übersicht gegeben, nach welcher es einfach und schnell eine Übersicht hinsichtlich der aktuellen Betriebssituation einzelner Bearbeitungspfade erhält. Es bekommt Informationen über den kritischen Bearbeitungspfad und mögliche Puffer, welche in anderen Bearbeitungspfaden noch vorliegen.

Ebenfalls von Vorteil ist es, wenn bei einem erfindungsgemäßen Verfahren für die Bearbeitungspfade die Differenz zwischen der jeweiligen Ausführungsdauer und der längsten Ausführungsdauer als Ausführungspuffer bestimmt wird. Wie bereits erläutert worden ist, besteht zwischen den einzelnen Ausführungsdauerwerten der einzelnen Bearbeitungspfade grundsätzlich eine Differenz. Die Wahrscheinlichkeit einer gleich langen Ausführungsdauer für unterschiedliche Bearbeitungspfade ist demnach sehr gering. Die Differenz dieser Werte für die Ausführungsdauer einzelner Bearbeitungspfade wird erfindungsgemäß als Ausführungspuffer bezeichnet und ist ebenfalls spezifisch für die Betriebssituation und den jeweiligen Bearbeitungspfad. Somit können die Ausführungspuffer als Potenzial verstanden werden für den jeweiligen Bearbeitungspfad. Auch ist vorzugsweise auf der gleichen Anzeigevorrichtung wie sie im voranstehenden Absatz erläutert worden ist, eine Anzeige dieser Ausführungspuffer vorgesehen. Dies führt dazu, dass das Potenzial in kürzeren Bearbeitungspfaden im Vergleich zum kritischen Bearbeitungspfad ebenfalls für das Bedienpersonal sichtbar ist. So kann in der bereits beschriebenen Liste auf der Anzeigevorrichtung zusätzlich auch der Ausführungspuffer des jeweiligen Bearbeitungspfades erkannt werden. Damit wird es möglich, neben Optimierung von Bearbeitungsschritten innerhalb des kritischen Bearbeitungspfads zur Verkürzung der längsten Ausführungsdauer auch eine Anhebung der kürzeren Ausführungsdauerwerte entsprechend kürzerer Bearbeitungspfade zu erzielen. Damit kann zum Beispiel eine verschleißoptimierte Ausführung oder eine längere Kühlung der entsprechenden Bearbeitungsschritte durch Verlängerung der zugehörigen Taktzeit erreicht werden. Dies wirkt sich jedoch nicht negativ auf die aktuelle Geschwindigkeit der Sackfüllanlage aus.

Vorteilhaft ist es darüber hinaus, wenn bei einem erfindungsgemäßen Verfahren auf Basis des jeweiligen Ausführungspuffers gemäß dem voranstehenden Absatz zumindest ein einzelner Bearbeitungsschritt eines Bearbeitungspfades hinsichtlich seiner Taktzeit verlängert wird, insbesondere Bearbeitungsschritte mit Kühlwirkung. Wie bereits erläutert worden ist, sind Bearbeitungspfade mit Ausführungspuffer unkritisch hinsichtlich der aktuellen Betriebsgeschwindigkeit der Sackfüllanlage. Das bedeutet, dass Änderungen der Taktzeit der einzelnen Bearbeitungsschritte solcher Bearbeitungspfade keinerlei Einwirkung auf die aktuelle Betriebsgeschwindigkeit der Sackfüllanlage aufweisen. Auch Verlängerungen der Taktzeiten sind somit unerheblich für diese Geschwindigkeit. Damit können zum Beispiel Bearbeitungsschritte mit Kühlwirkung, wie sie zum Beispiel in einer Bodennahtkühlstation oder Kopfnahtkühlstation vorliegen, verlängert werden. Die Kühlwirkung kann auf diese Weise verbessert werden. Auch kann durch eine solche Optimierungsmöglichkeit sogar bei der Konstruktion und Herstellung einer Sackfüllanlage mit kleineren und damit leistungsreduzierten Bearbeitungsstationen hinsichtlich der Kühlstationen gearbeitet werden. Neben Bearbeitungsschritten mit Kühlwirkung kann bei einer Verlängerung der jeweiligen Taktzeit nach dieser Ausführungsform des erfindungsgemäßen Verfahrens auch eine Reduktion von Verschleiß der jeweiligen Bearbeitungsstation das Ziel sein. Maximal wird die Verlängerung der Taktzeit derart ausfallen, dass der beschriebene Ausführungspuffer auf Null gebracht wird.

Ebenfalls von Vorteil kann es sein, wenn bei einem erfindungsgemäßen Verfahren die einzelnen Verfahrensschritte sich wiederholend als Schleife, insbesondere kontinuierlich oder im Wesentlichen kontinuierlich, ausgeführt werden. Mit anderen Worten wird die Sackfüllanlage in erfindungsgemäßer Weise sich wiederholend und ständig überwacht. Damit kann auch eine ständige Auffrischung der Anzeige auf einer entsprechenden Anzeigevorrichtung erfolgen. Insbesondere wird eine auf diese Weise durchgeführte Optimierung an einzelnen Bearbeitungsschritten sofort bei der nächsten Durchführung des erfindungsgemäßen Verfahrens auch deutlich und angezeigt. Dabei ist es möglich, dass für die einzelnen Werte der Ausführungsdauer vorgegebene Mindestwerte vorgesehen sind, um die grundsätzliche Leistungsfähigkeit der Sackfüllanlage nicht zu unterschreiten. Auch ist es möglich, dass Alarmfunktionen ausgeführt werden, wenn bestimmte Ausführungszeiten hinsichtlich der längsten Ausführungsdauer überschritten werden.

Ebenfalls von Vorteil ist es, wenn bei einem erfindungsgemäßen Verfahren jede Taktzeit der Bearbeitungsschritte des Bearbeitungspfades mit der längsten Ausführungsdauer mit einem Vorgabewert verglichen und die Differenz zu diesem Vorgabewert bestimmt und insbesondere auf einer Anzeigevorrichtung angezeigt wird. Das bedeutet, dass hinsichtlich der einzelnen Taktzeiten ein Soll-Wert vorgegeben werden kann, welcher als Soll-Wert für die jeweilige Taktzeit zum Einsatz kommt. Somit kann ein erfindungsgemäßes Verfahren zusätzlich noch eine Abweichung zwischen tatsächlicher Taktzeit, also dem Ist-Wert, und dem Soll-Wert als Vorgabewert zur Verfügung stellen. Abweichungen mit Qualitätseinfluss bezüglich solcher Vorgabewerte werden dementsprechend ebenfalls auf der Anzeigevorrichtung angezeigt und können eine höhere Priorisierung zur Optimierung eines derartigen Bearbeitungsschrittes zur Verfügung stellen.

Ebenfalls vorteilhaft kann es weiter sein, wenn bei einem erfindungsgemäßen Verfahren für die Optimierung der Taktzeiten einzelner Bearbeitungsschritte eine Untergrenze vorgegeben ist. Wie bereits erläutert worden ist, wird durch ein erfindungsgemäßes Verfahren automatisiert eine Identifikation von Bearbeitungsschritten im kritischen Bearbeitungspfad für das Bedienpersonal zur Verfügung gestellt. Um sicherzustellen, dass nun auch bei weniger erfahrenem Bedienpersonal keine Unterschreitung von den kritischen Werten für die einzelnen Taktzeiten der Bearbeitungsschritte erfolgt, kann über eine Kontrolleinheit eine Untergrenze vorgegeben werden. Diese Untergrenze kann bei der Optimierung durch Variation der Taktzeiten durch das Bedienpersonal nicht unterschritten werden. Eine unerwünschte Reduktion der Qualität durch zu starke Reduktion von Taktzeiten einzelner Bearbeitungsschritte wird auf diese Weise wirksam und kostengünstig vermieden. Beispielsweise kann es sich hier um eine Mindestkühlzeit einzelner Kühlstationen der Sackfüllanlage handeln.

Vorteilhaft ist es darüber hinaus, wenn bei einem erfindungsgemäßen Verfahren der Beginn einzelner Bearbeitungsschritte in einem Bearbeitungspfad mit geringerer Ausführungsdauer als die längste Ausführungsdauer nach hinten verschoben wird. Wie ebenfalls bereits erläutert worden ist, können dabei durch sequenzielle Ausführungen einzelner Bearbeitungsschritte in kürzeren Bearbeitungspfaden als dem kritischen Bearbeitungspfad Pausen zwischen den einzelnen Bearbeitungsschritten als sogenannte Taktpuffer auftreten. Somit wird es möglich, in solchen kürzeren Bearbeitungspfaden eine Verschiebung des Startzeitpunkts und damit auch des Endzeitpunkts des jeweiligen Bearbeitungsschrittes durchzuführen. Damit kann zum Beispiel eine Beruhigung der Folienführung bzw. des Sackabschnitts erfolgen. Auch wird eine erhöhte Flexibilität bei der Durchführung eines erfindungsgemäßen Verfahrens erzeugt. Der Beginn einzelner Bearbeitungsschritte wird damit insbesondere innerhalb einer sequenziell durchgeführten Folge von Bearbeitungsschritten eines Bearbeitungspfades voneinander entkoppelt.

Ebenfalls Gegenstand der vorliegenden Erfindung ist eine Sackfüllanlage für die Befüllung von Sackabschnitten mit Schüttgut, aufweisend Stationen zur Bearbeitung der Sackabschnitte einer Folienbahn, Sensorvorrichtungen für die Bestimmung von Taktzeiten einzelner Bearbeitungsschritte an den Stationen und eine Kontrolleinheit für die Ausführung eines erfindungsgemäßen Verfahrens. Dementsprechend bringt eine erfindungsgemäße Sackabfüllanlage die gleichen Vorteile mit sich, wie sie ausführlich mit Bezug auf ein erfindungsgemäßes Verfahren erläutert worden sind. Die Sensorvorrichtung kann einzelne Sensoren oder Sensormittel aufweisen, die insbesondere als Endpositionsschalter und Startpositionsschalter an den jeweiligen Stationen der Sackfüllanlage angeordnet sind.

Weitere Merkmale, Vorteile und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Sackfüllanlage,
- Fig. 2: eine schematische Darstellung unterschiedlicher Bearbeitungspfade,
- Fig. 3: eine schematische Darstellung des Bearbeitungspfades mit der längsten Ausführungsdauer,
- Fig. 4: eine schematische Darstellung eines Bearbeitungspfades mit kürzerer Ausführungsdauer,
- Fig. 5: die Ausführungsform der Fig. 4 in Summendarstellung und
- Fig. 6: eine mögliche Anzeigedarstellung auf einer Ausführungsform einer Anzeigevorrichtung.

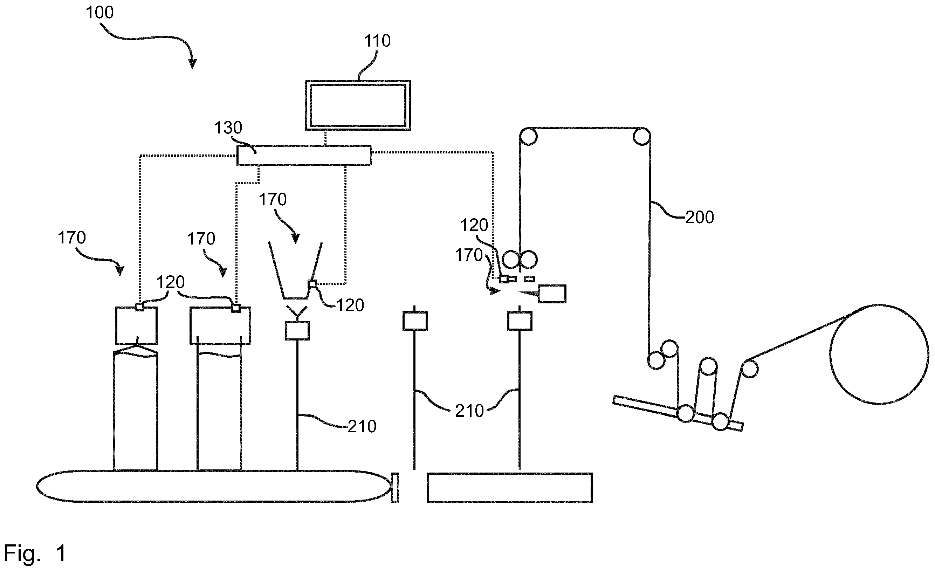

Fig. 1 zeigt schematisch eine Ausführungsform einer Sackfüllanlage 100. Ausgehend von einer Vorlagerolle wird von rechts kontinuierlich eine Folienbahn 100 abgewickelt und die kontinuierliche Förderweise über eine Puffervorrichtung, hier ausgebildet als Tänzervorrichtung, in einen taktweisen Vorschub umgewandelt. Als nächste Station 170 ist hier eine Bodennahtsiegelstation vorgesehen, welche gleichzeitig eine Schneidvorrichtung aufweist. Hier erfolgt das Ablängen der Folienbahn 200 in einzelne Sackabschnitte 210. Die Sackabschnitte 210 werden von hier über Greifervorrichtungen von rechts nach links im Pendelbetrieb gefördert. So werden weitere Stationen 170 in Form einer Füllstation, einer Kopfnahtsiegelstation und einer Kopfnahtkühlstation erreicht.

Wie der Fig. 1 ebenfalls zu entnehmen ist, ist an den relevanten Stationen 170 jeweils eine Sensorvorrichtung 120 vorgesehen. In signalkommunizierender Verbindung mit den Sensorvorrichtungen 120 ist eine Kontrolleinheit 130 vorgesehen. Diese dient insbesondere dazu, die Taktzeiten 12 der einzelnen Stationen 170 und der entsprechenden Bearbeitungsschritte 10 zu erfassen. Ebenfalls zu erkennen ist eine Anzeigevorrichtung 110, welche hier als Display angeordnet ist. Sie befindet sich ebenfalls in signalkommunizierender Verbindung mit der Kontrolleinheit 130.

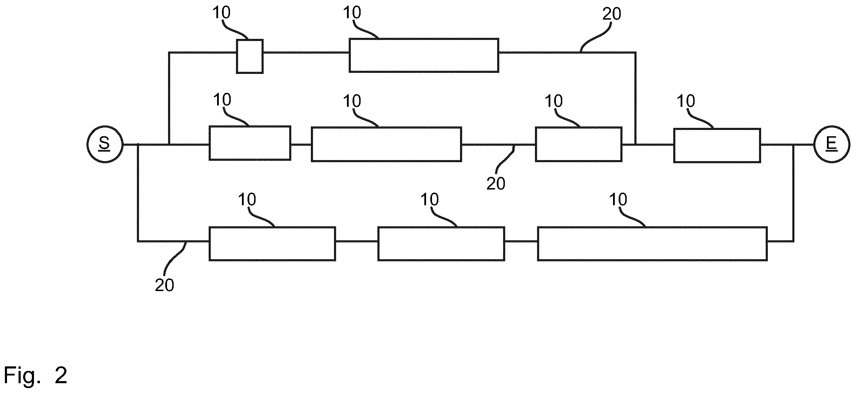

In Fig. 2 wird dargestellt, wie unterschiedliche Bearbeitungspfade 20 innerhalb der Durchführung der Prozesse einer Sackabfüllanlage 100 ausgebildet sein können. Mit S ist die Startposition und E die Endposition des Sackabschnitts definiert. So kann S als Startposition auch die Vorlagerolle definieren, während das Ende E die Entnahme des befüllten und verschlossenen Sackabschnitts 210 darstellt. Schematisch mit geschlossenen Kästen ist hier eine Vielzahl unterschiedlicher Bearbeitungsschritte 10 dargestellt. Die Breite des jeweiligen Kästchens für den Bearbeitungsschritt 10 zeigt hier schematisch die Länge bzw. die unterschiedliche Art des Bearbeitungsschritts 10 an. Hier ist zu erkennen, dass eine beliebige Verschachtelung der einzelnen Bearbeitungsschritte 10 in paralleler, sequenzieller und teilsequenzieller Weise erfolgen kann. Damit lassen sich unterschiedliche Bearbeitungspfade 20, in der Ausführungsform der Fig. 2 sind es drei Bearbeitungspfade 20, zwischen dem Start S und dem Ende E definieren.

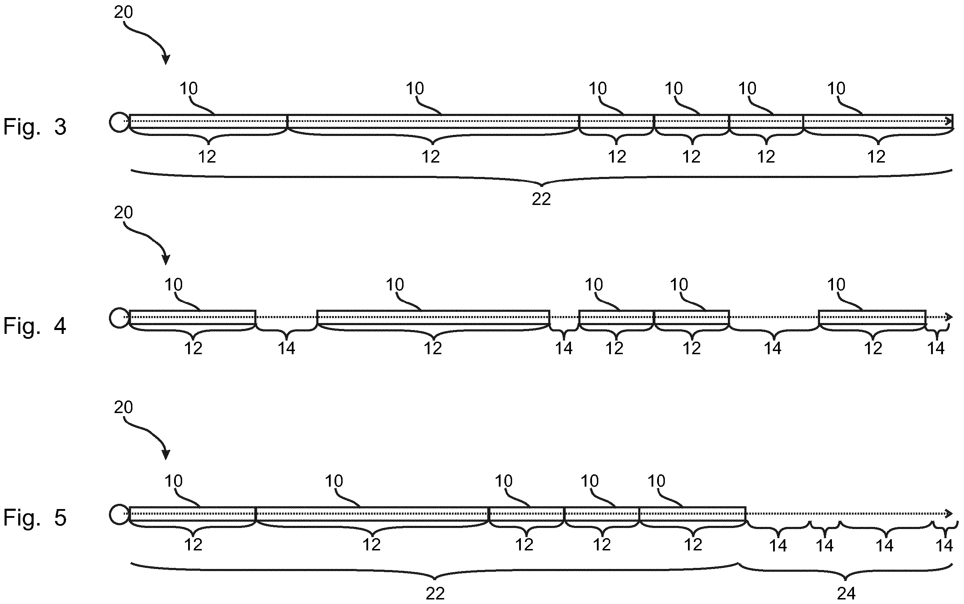

Erfindungsgemäß erfolgt nun eine Überwachung der einzelnen Bearbeitungsschritte 10 innerhalb der Sackfüllanlage 100. So ist in Fig. 3 dargestellt, wie sämtliche Bearbeitungsschritte 10 hier eines Bearbeitungspfades 20 sequenziell hintereinander ausgeführt werden. Jeder Bearbeitungsschritt 10 weist hier eine Taktzeit 12 auf, welche sich dementsprechend aufaddieren zur gesamten Ausführungsdauer 22 dieses Bearbeitungspfades 20.

In Fig. 4 ist ein alternativer Bearbeitungspfad 20 dargestellt, welcher parallel zum Bearbeitungspfad 20 der Fig. 3 innerhalb der gleichen Sackfüllanlage 100 ausgeführt wird. Hier ist zu erkennen, dass zwischen der Ausführung einzelner Bearbeitungsschritte 10 mit den entsprechenden Taktzeiten 12 Pausen in Form von Taktpuffern 14 vorgesehen sind. In Fig. 5 ist die Summensituation der Fig. 4 dargestellt. So ist hier gut zu erkennen, dass durch Aufsummieren der Taktzeiten 12 der Bearbeitungsschritte 10 des Bearbeitungspfades 20 der Fig. 4 eine Ausführungsdauer 22 erzeugt wird, welche kürzer als die längste Ausführungsdauer 22 gemäß Fig. 3 ist. Die Differenz zwischen den beiden Werten für die Ausführungsdauer 22 gemäß den Fig. 3 und 5 ist die Summe der Taktpuffer 14 und dementsprechend der Ausführungspuffer 24 für diesen Bearbeitungspfad 20.

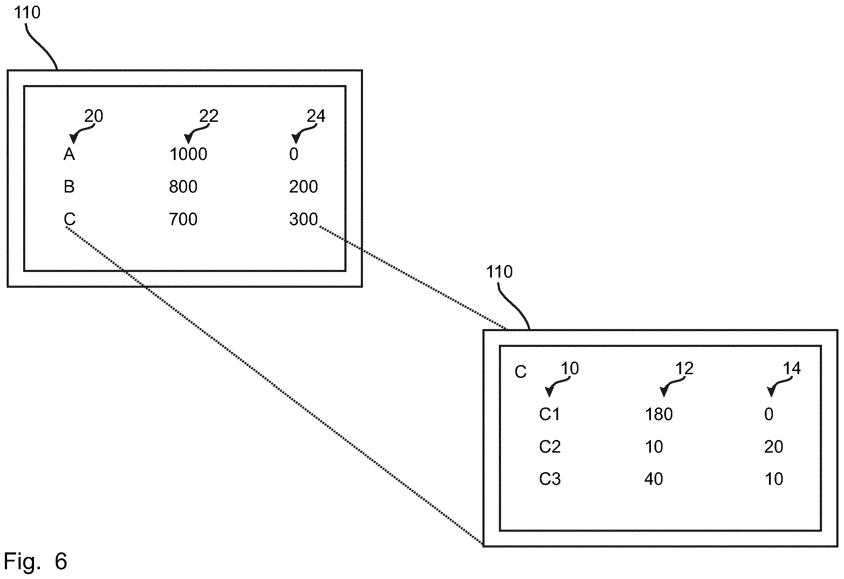

Nach Durchführung eines erfindungsgemäßen Verfahrens kann eine Anzeige auf der Anzeigevorrichtung 110 erfolgen, wie sie beispielsweise in Fig. 6 dargestellt ist. So ist links oben eine erste Menüdarstellung auf der Anzeigevorrichtung 110 zu erkennen. In einer Liste sind drei verschiedene Bearbeitungspfade 20, gekennzeichnet mit A, B und C, untereinander listenförmig angeordnet. Für jeden Bearbeitungspfad 20 sind hier zwei Parameterwerte, nämlich die Ausführungsdauer 22 und der sich daraus ergebende Wert für den Ausführungspuffer 24 angegeben. Hier ist für das Bedienpersonal erkennbar, dass es sich bei dem Bearbeitungspfad 20, hier mit dem Buchstaben A, um den kritischen Bearbeitungspfad 20 handelt, wie er zum Beispiel in Fig. 3 angegeben ist. Dieser Bearbeitungspfad A ist also hinsichtlich der enthaltenen Bearbeitungsschritte 10 zu optimieren, wenn die Gesamtgeschwindigkeit der Sackfüllanlage 100 verbessert werden soll.

Gleichzeitig kann eine Auswahl der einzelnen Bearbeitungspfade 20 erfolgen. In Fig. 6 ist schematisch eine Auswahl des Bearbeitungspfades 20 mit dem Buchstaben C erfolgt. Hier erfolgt eine detaillierte Anzeige dieses Bearbeitungspfades 20 hinsichtlich der einzelnen Bearbeitungsschritte 10, hier als C1, C2 und C3 dargestellt. Für jeden einzelnen Bearbeitungsschritt 10 wird nun ebenfalls die Taktzeit 12 und der zugehörige Taktpuffer 14 dargestellt. Hier ist gut zu erkennen, dass der Taktpuffer 14 zum Beispiel für die Bearbeitungsschritte 10 mit den Bezugszeichen C2 und C3 vorhanden ist und dementsprechend eine Verlängerung dieser einzelnen Bearbeitungsschritte 10 möglich wird. Eine solche Verlängerung hat jedoch keinerlei Einfluss auf die aktuelle Betriebsgeschwindigkeit der Sackfüllanlage 100, da es sich bei diesem Bearbeitungspfad 20 mit dem Buchstaben C nicht um den kritischen Bearbeitungspfad 20 mit der längsten Ausführungsdauer 22 handelt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Bearbeitungsschritt
- 12: Taktzeit
- 14: Taktpuffer
- 20: Bearbeitungspfad
- 22: Ausführungsdauer
- 24: Ausführungspuffer

- 100: Sackfüllanlage
- 110: Anzeigevorrichtung
- 120: Sensorvorrichtung
- 130: Kontrolleinheit
- 170: Station

- 200: Folienbahn
- 210: Sackabschnitt

- S: Start
- E: Ende

## Patentansprüche

1. Verfahren für die Bestimmung zu optimierender Bearbeitungsschritte (10) in einer Sackfüllanlage (100) zur Befüllung von Sackabschnitten (210) mit Schüttgut, **gekennzeichnet durch** die folgenden Schritte:
- Überwachen der Taktzeiten (12) von Bearbeitungsschritten (10) der Sackfüllanlage (100),
- Bestimmen von Bearbeitungspfaden (20) sequentiell ausgeführter Bearbeitungsschritte (10),
- Bestimmen der Summe der Taktzeiten (12) der Bearbeitungsschritte (10) innerhalb von Bearbeitungspfaden (20) als Ausführungsdauer (22) des jeweiligen Bearbeitungspfades (20),
- Vergleichen der bestimmten Ausführungsdauer (22) der Bearbeitungspfade (20),
- Bestimmen des Bearbeitungspfades (20) mit der längsten Ausführungsdauer (22).

2. Verfahren nach einem der vorangegangenen Ansprüche, **dadurch gekennzeichnet, dass** zumindest der bestimmte Bearbeitungspfad (20) mit der längsten Ausführungsdauer (22), insbesondere alle Bearbeitungspfade (20), zusammen mit der jeweiligen Ausführungsdauer (22) auf einer Anzeigevorrichtung (110) angezeigt werden.

3. Verfahren nach einem der vorangegangenen Ansprüche, **dadurch gekennzeichnet, dass** für die Bearbeitungspfade (20) die Differenz zwischen der jeweiligen Ausführungsdauer (22) und der längsten Ausführungsdauer (22) als Ausführungspuffer (24) bestimmt wird.

4. Verfahren nach Anspruch 3, **dadurch gekennzeichnet, dass** auf Basis des jeweiligen Ausführungspuffers (24) zumindest ein einzelner Bearbeitungsschritt (10) eines Bearbeitungspfades (20) hinsichtlich seiner Taktzeit (12) verlängert wird, insbesondere Bearbeitungsschritte (10) mit Kühlwirkung.

5. Verfahren nach einem der vorangegangenen Ansprüche, **dadurch gekennzeichnet, dass** die einzelnen Verfahrensschritte sich wiederholend als Schleife, insbesondere kontinuierlich oder im Wesentlichen kontinuierlich, ausgeführt werden.

6. Verfahren nach einem der vorangegangenen Ansprüche, **dadurch gekennzeichnet, dass** jede Taktzeit (12) der Bearbeitungsschritte (10) des Bearbeitungspfades (20) mit der längsten Ausführungsdauer (22) mit einem Vorgabewert verglichen und die Differenz zu diesem Vorgabewert bestimmt und insbesondere auf einer Anzeigevorrichtung (110) angezeigt wird.

7. Verfahren nach einem der vorangegangenen Ansprüche, **dadurch gekennzeichnet, dass** für die Optimierung der Taktzeiten (12) einzelner Bearbeitungsschritte (10) eine Untergrenze vorgegeben ist.

8. Verfahren nach einem der vorangegangenen Ansprüche, **dadurch gekennzeichnet, dass** der Beginn einzelner Bearbeitungsschritte (10) in einem Bearbeitungspfad (20) mit geringerer Ausführungsdauer (22) als die längste Ausführungsdauer (22) nach hinten verschoben wird.

9. Sackfüllanlage (100) für die Befüllung von Sackabschnitten (210) mit Schüttgut, aufweisend Stationen (170) zur Bearbeitung der Sackabschnitte (210) einer Folienbahn (200), Sensorvorrichtungen (120) für die Bestimmung von Taktzeiten (12) einzelner Bearbeitungsschritte (10) an den Stationen (170) und **gekennzeichnet durch** eine Kontrolleinheit (130) die für die Ausführung eines Verfahrens mit den Merkmalen eines der Ansprüche 1 bis 8 angepasst ist.

## Claims

1. A method for determining processing steps (10) to be optimized in a bag-filling system (100) for filling bag segments (210) with bulk material, **characterized by** the following steps:
- Monitoring the cycle times (12) of the processing steps (10) of the bag-filling system (100),
- Determining processing paths (20) of sequentially performed processing steps (10),
- Determining the sum of the cycle times (12) of the processing steps (10) within processing paths (20) as a performance duration (22) of the respective processing path (20),
- Comparing the determined performance duration (22) of the processing paths (20),
- Determining the processing path (20) having the longest performance duration (22).

2. A method according to any one of the preceding claims, **characterized in that** at least the determined processing path (20) with the longest performance duration (22), in particular all processing paths (20), are displayed together with the respective performance duration (22) on a display device (110).

3. A method according to any one of the preceding claims, **characterized in that** for processing paths (20) the difference between the respective performance duration (22) and the longest performance duration (22) is determined as a performance buffer (24).

4. A method according to Claim 3, **characterized in that** on the basis of the respective performance buffer (24) at least an individual processing step (10) of a processing path (20) is extended in respect to its cycle time (12), in particular, processing steps (10) with cooling effect.

5. A method according to any one of the preceding claims, **characterized in that** the individual method steps are performed repetitively as a loop, in particular, continuously or substantially continuously.

6. A method according to any one of the preceding claims, **characterized in that** each cycle time (12) of the processing steps (10) of the processing path (20) with the longest performance duration (22) is compared with a default value and the difference from said default value is determined and in particular is displayed on a display device (110).

7. A method according to any one of the preceding claims, **characterized in that** a lower limit is predetermined for the optimization of the cycle times (12) of individual processing steps (10)

8. A method according to any one of the preceding claims, **characterized in that** the beginning of individual processing steps (10) in a processing path (20) with less performance duration (22) than the longest performance duration (22) is moved back.

9. A bag-filling system (100) for filling bag segments (210) with bulk material, having stations (170) for processing the bag segments (210) of a film web (200), sensor devices (120) for determining cycle times (12) of individual processing steps (10) at the stations (170) and **characterized by** a control unit (130), which is adjusted for the performance of a method with the features of any one of Claims 1 to 8.

## Revendications

1. Procédé pour déterminer des étapes de traitement (10) à optimiser dans une installation de remplissage de sacs (100) destinée au remplissage de sections de sac (210) avec de la matière en vrac, **caractérisé par** les étapes suivantes :
- surveillance des temps de cycle (12) d'étapes de traitement (10) de l'installation de remplissage de sacs (100),
- détermination de trajectoires de traitement (20) d'étapes de traitement (10) exécutées de manière séquentielle (10),
- détermination de la somme des temps de cycle (12) des étapes de traitement (10) à l'intérieur de trajectoires de traitement (20) en tant que durée d'exécution (22) de la trajectoire de traitement (20) respective,
- comparaison de la durée d'exécution (22) déterminée des trajectoires de traitement (20),
- détermination de la trajectoire de traitement (20) ayant la durée d'exécution (22) la plus longue.

2. Procédé selon l'une des revendications précédentes, **caractérisé en ce qu'**au moins la trajectoire de traitement (20) déterminée ayant la durée d'exécution (22) la plus longue, en particulier toutes les trajectoires de traitement (20), sont affichées conjointement avec la durée d'exécution (22) respective sur un dispositif d'affichage (10).

3. Procédé selon l'une des revendications précédentes, **caractérisé en ce que**, pour les trajectoires de traitement (20), la différence entre la durée d'exécution (22) respective et la durée d'exécution (22) la plus longue est déterminée en tant que tampon d'exécution (24).

4. Procédé selon la revendication 3, **caractérisé en ce que,** sur la base du tampon d'exécution (24) respectif, au moins une étape de traitement (10) individuelle d'une trajectoire de traitement (20) est prolongée en ce qui concerne son temps de cycle (12), en particulier des étapes de traitement (10) avec action de refroidissement.

5. Procédé selon l'une des revendications précédentes, **caractérisé en ce que** les étapes de procédés individuelles sont exécutées de façon itérative en tant que boucle, en particulier de façon continue ou essentiellement de façon continue.

6. Procédé selon l'une des revendications précédentes, **caractérisé en ce que** chaque temps de cycle (12) des étapes de traitement (10) de la trajectoire de traitement (20) ayant la durée d'exécution (22) la plus longue est comparée à une valeur prédéfinie, et la différence avec cette valeur prédéfinie est déterminée et en particulier est affichée sur un dispositif d'affichage (110).

7. Procédé selon l'une des revendications précédentes, **caractérisé en ce qu'**une limite inférieure est prédéfinie pour l'optimisation des temps de cycle (12) d'étapes de traitement (10) individuelles.

8. Procédé selon l'une des revendications précédentes, **caractérisé en ce que** le début d'étapes de traitement (10) individuelles dans une trajectoire de traitement (20) ayant une durée d'exécution (22) plus faible que la durée d'exécution (22) la plus longue est repoussé vers l'arrière.

9. Installation de remplissage de sacs (100) pour le remplissage de sections de sac (210) avec de la matière en vrac, présentant des stations (170) pour le traitement des sections de sac (210) d'une nappe de feuille (200), des dispositifs de capteur (120) pour la détermination de temps de cycle (12) d'étapes de traitement (10) individuelles au niveau des stations (170), et **caractérisée par** une unité de contrôle (130) qui est adaptée pour l'exécution d'un procédé ayant les caractéristiques d'une des revendications 1 à 8.
